# EUROPEAN PATENT SPECIFICATION

(11) **EP 1 732 770 B1**
(45) Date of publication and mention of the grant of the patent: **16.01.2008**
(21) Application number: 04726591.3
(22) Date of filing: 08.04.2004
(51) Int. Cl.: B60B 7/20

(54) **WHEEL ARRANGEMENT AND WHEEL COVER ARRANGEMENT FOR SUCH A WHEEL ARRANGEMENT**
RADANORDNUNG UND RADKAPPENANORDNUNG FÜR SOLCH EINE RADANORDNUNG
AGENCEMENT DE ROUE ET AGENCEMENT D'ENJOLIVEUR DE ROUE ASSOCIE

(43) Date of publication of application: 20.12.2006
(73) Proprietor: Louvel, Philippe, 92350 Le Plessis Robinson (FR)
(72) Inventor: Louvel, Philippe, 92350 Le Plessis Robinson (FR)
(86) International application number: PCT/IB2004/001503
(87) International publication number: WO 2005/097519

(56) References cited:
- DE-C- 403 614
- FR-A- 562 943
- US-A- 3 155 430

## Description

### BACKGROUND OF THE INVENTION

The present invention relates to wheel arrangements and to wheel cover arrangements for such wheel arrangements, in particular for vehicles.

### PRIOR ART

Several patents have already disclosed a wheel cover able to rotate relative to the wheel.

A first family of patents propose a wheel cover that is kept in the upright position with a gravity pendulum system, just to mention some: Patent US3769729, issued in 1973 to Engler, Patent US4280293, issued in 1981 to Kovalenko & Bowen, Patent US4388771, issued in 1983 to Lalonde, Patent JP3016801, issued in 1992 to Tamakasi, Patent EP0982154, issued in 2000 to Okamoto, Patent WO0020231, issued in 2000 to Nooijen, Patent EP1104352, issued in 2002 to Romijn, Patent US6536848, issued in 2003 to Goodman.

The purpose of these inventions is to display an advertisement, a brand name or a picture that stays in the appropriate orientation. However, this orientation cannot be kept during acceleration and deceleration of the vehicle.

A second family of patents propose a freewheeling wheel cover that is driven by air fins: Patent US3219391, issued in 1965 to Hettinger, Patent US3722958, issued in 1973 to Marshall, Patent DE10145897, issued in 2003 to Gruenert, patent US6702396, issued to Wang.

The purpose of these patents is to provide a decorative effect. But the drawback of these inventions is that the rotation of the cover depends on the relative wind, and that the rotation can also occur when the wheel is not rotating (vehicle at rest).

A third family of patents propose a wheel cover that rotates in a direction opposite to that of the vehicle wheel : Patents DE 403614, US 3155430 and FR 562943.

### OBJECTS AND SUMMARY OF THE INVENTION

One purpose of the present invention is to avoid the above-mentioned drawbacks and to propose a wheel cover that provides an outstanding visual effect.

To this end, according to the invention, a wheel arrangement comprises:
- a vehicle wheel having an axis of rotation,
- a pendulum which is rotatably mounted about the axis of rotation of the vehicle wheel,
- an external cover which is also rotatably mounted about the axis of rotation of the vehicle wheel,
- an intermediate gear which is linked to the pendulum and which engages with both the vehicle wheel and the external cover, said intermediate gear being adapted to be driven by the vehicle wheel when said vehicle wheel is rotating in a first direction about the axis of rotation, and said intermediate gear being adapted, when driven by the vehicle wheel, to drive said external cover in rotation about the axis of rotation in a second direction opposite to said first direction.

Thanks to these dispositions, the wheel arrangement according to the invention avoids the drawbacks of the prior art and gives the visual impression that the vehicle is literally sliding on the ground.

In various embodiments of the wheel arrangement according to the invention, one may use one and/or several of the following dispositions:
- the vehicle wheel includes a rigid bracket which is in engagement with the intermediate gear and which is adapted to drive said intermediate gear when said vehicle wheel is rotating ;
- the bracket includes a spindle on which the pendulum and the external cover are rotatably mounted ;
- the wheel includes a rigid rim and the bracket is fixed to said rim ;
- the pendulum includes a stem around which is mounted the intermediate gear ;
- the intermediate gear includes first and second gear wheels which are rigid with one another and which are rotatably mounted together around the stem of the pendulum, the first gear wheel engaging with the vehicle wheel and the second gear wheel engaging with the external cover ;
- the intermediate gear has at least a driving interface which is made of friction material and which is in engagement with one element chosen between the vehicle wheel and the external cover ;
- the intermediate gear has at least a driving interface which includes a toothing, said toothing meshing with a complementary toothing which is rigid with one element chosen between the vehicle wheel and the external cover.

Another object of the invention is a wheel cover arrangement adapted to be fitted on a vehicle wheel having an axis of rotation, said wheel cover arrangement comprising:
- a pendulum which is adapted to be rotatably mounted about the axis of rotation of the vehicle wheel,
- an external cover which is also adapted to be rotatably mounted about the axis of rotation of the vehicle wheel,
- an intermediate gear which is linked to the pendulum and which is adapted to be in engagement with both the vehicle wheel and the external cover, said intermediate gear being adapted to be driven by the vehicle wheel when said vehicle wheel is rotating in a first direction about the axis of rotation, and said intermediate gear being adapted, when driven by the vehicle wheel, to drive said external cover in rotation about the axis of rotation in a second direction opposite to said first direction.

In various embodiments of the wheel cover arrangement according to the invention, one may use one and/or several of the following dispositions:
- the wheel cover arrangement further includes a rigid bracket which is adapted to be secured to the vehicle wheel, said bracket engaging with the intermediate gear and being adapted to drive said intermediate gear when the vehicle wheel is rotating.
- the bracket includes a spindle on which the pendulum and the external cover are rotatably mounted ;
- the pendulum includes a stem around which is mounted the intermediate gear ;
- the intermediate gear includes first and second gear wheels which are rigid with one another and which are rotatably mounted together around the stem of the pendulum, the first gear wheel being adapted to engage with the vehicle wheel and the second gear wheel engaging with the external cover.

### BRIEF DESCRIPTION OF THE DRAWINGS

Other features and advantages will appear from the following description of one embodiment thereof, given by way of non-limiting example, with reference to the appended drawings.

In the drawings:
- Figure **1** is a sectional view of the invention,
- Figure **2** is a face view of the invention,
- Figure **3** is a perspective view of the invention,
- Figure **4** is a sectional view oh the gear arrangement,
- Figure **5** is a detailed sectional view of the spindle joint.

### MORE DETAILED DESCRIPTION

The functionalities and the characteristics of the invention will be explained in the following comprehensive description.

The main goal of the invention is to propose the outstanding visual effect that the vehicle is sliding on the ground when moving.

This is achieved by driving the wheel cover in the direction opposite to the wheel rotation.

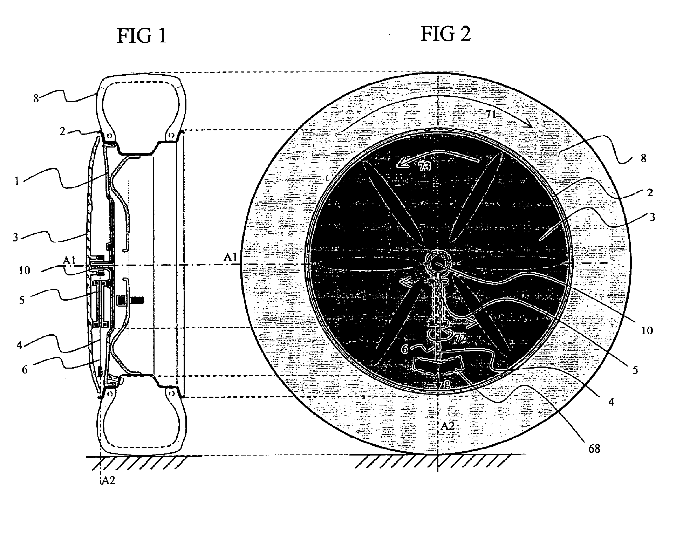

**Figure 1** shows a sectional view of one embodiment of the invention.

The wheel comprises a tyre 8 and a rim 2. The wheel rotates around the axis of rotation A1.

A bracket 1 is fitted on to the rim 2, this bracket comprises a spindle 10.

A pendulum 6 is rotatably mounted around the wheel axis A1 on the bracket spindle 10.

This pendulum comprises a stem 4.

An intermediate gear 5 is rotatably mounted around said stem 4, rotating around the axis A2. The external cover 3 is rotatably mounted on the bracket spindle, the external cover 3 rotates around the wheel axis A1.

**Figure 2** shows a face view of the invention, in conjunction with Figure 1.

The wheel, including the tyre 8 and the rim 2, rotates towards the direction 71.

The pendulum 6 is generally kept in the upright position due to the action of gravity g on the pendulum weight 68. The intermediate gear 5 is rotatably mounted around the pendulum stem 4.

The intermediate gear is driven by the wheel rotation towards the direction 72.

The external cover is driven by the intermediate gear 5 towards the direction 73.

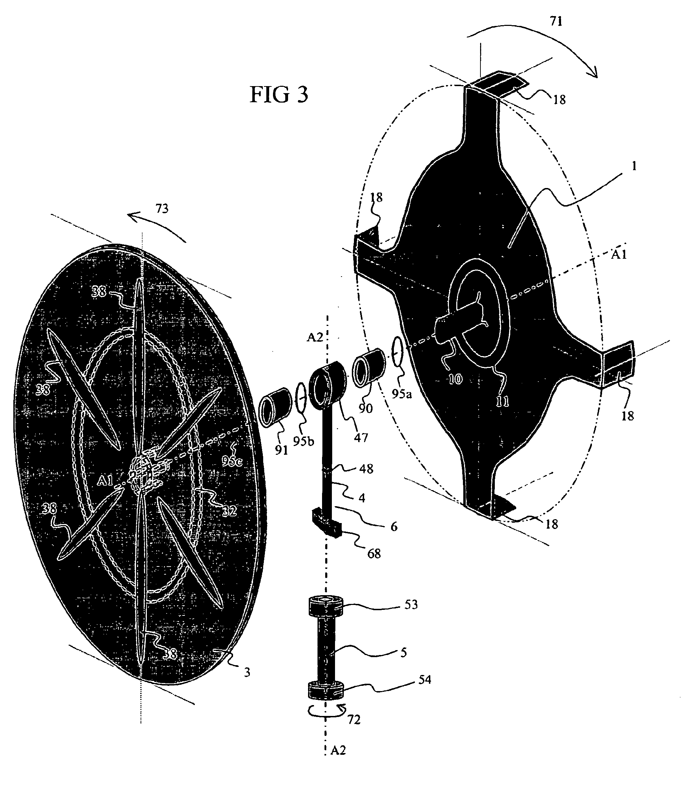

**Figure 3** shows a perspective view of the invention.

The bracket 1 comprises 4 fitting clips 18, whose purpose is to achieve the fastening of the bracket on to the rim 2. The method of fixing the bracket on the rim is one of those known in the prior art, thus not detailed.

The bracket includes a spindle 10, located on the axis of rotation A1. The bracket also includes a circular driving area 11, that drives the intermediate gear.

On the spindle 10, are mounted several elements :
- a circlip 95a
- a bearing 90
- the pendulum ring 47 is mounted on said bearing 90
- a second circlip 95b
- a second bearing 91
- a third circlip 95c

The intermediate gear 5 is rotatably mounted around pendulum stem 4, comprising a first wheel 53 which is driven by bracket area 11, and a second wheel 54.

The wheels 53 and 54 are rigid with one another.

The external cover 3 is mounted on the second bearing 91.

The external cover comprises in the inner side a circular engagement area 32, which is driven by intermediate gear second wheel 54.

Several areas 38, given as examples, are located on the external side of the external cover. The purpose of these areas 38 is to customize the style of the cover.

The intermediate gear 5 is rotatably mounted around stem 4 between ring 47 and stop ring 48.

The pendulum 6 comprises a weight 68, whose action is to keep the pendulum un the upright position under the action of gravity g.

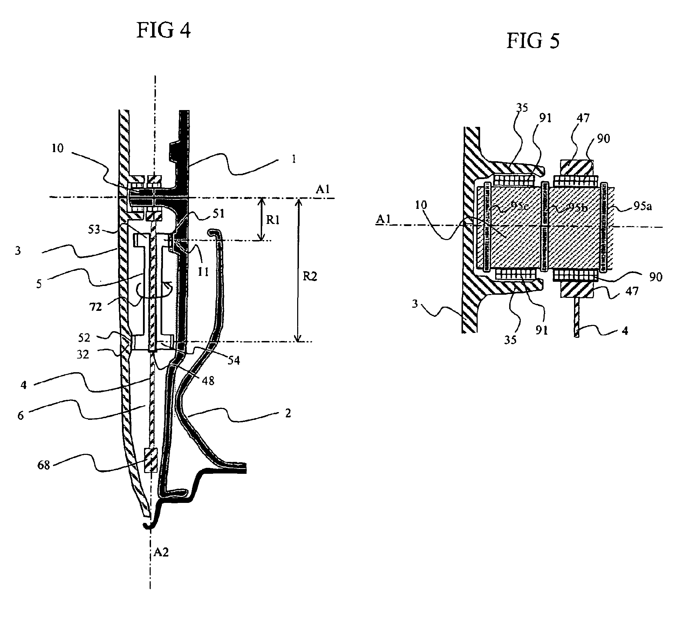

**Figure 4** shows a sectional view focused on the intermediate gear arrangement.

The bracket 1 is fixed on the wheel rim 2.

The bracket comprises a circular engagement face 11, said circular face having a radius R1 from the axis A1.

The intermediate gear comprises one first wheel 53, which engages in its outer face 51 with the bracket face 11.

Therefore, the intermediate gear rotates around axis A2 in the direction 72.

The intermediate gear 5 comprises a second wheel 54, which engages in its outer face 52 with the external cover engagement face 32, said face 32 having a radius R2 from the axis A1.

The wheels 53 and 54 being rigid with one another, thus the rotation speed is the same for both wheels 53 and 54.

The difference between radius R1 and R2 reflects into the relative speeds of the vehicle wheel and the external cover.

The external cover 3 rotates slower than the vehicle wheel according to the ratio R1/R2. Consequently, it is possible to see the rotation of the cover even when the vehicle is running at high speed on a motorway.

The intermediate gear 5 is located between ring 47 and stop ring 48.

The engagement means between bracket circular driving area 11 and first wheel peripheral area 51 can be of different types : two non limitative examples are :
- friction material coating
- toothing

The engagement means between second wheel peripheral area 52 and cover circular driving area 32 can be of different type : two non limitative examples are :
- friction material coating
- toothing

**Figure 5** shows a sectional view focused on the articulation joint arrangement on the bracket spindle 10.

The bracket spindle 10 comprises 3 circlips 95a, 95b and 95c.

A first bearing 90 is fitted between circlip 95a and 95b. This bearing is of a known technology (roller bearing, "Teflon" sleeve or other solution known in the art). The pendulum ring 47 is fitted on this bearing.

A second bearing 91 is fitted between circlip 95b and 95c. This bearing is of a known technology (roller bearing, "Teflon" sleeve or other solution known in the art). On this bearing is fitted the external cover 3, by the means of several clips 35 distributed around the circumference.

The following elements are all coaxial with main rotation axis A1 : spindle 10, circlip 95a, bearing 90, pendulum sleeve ring 47, circlip 95b, bearing 91, circlip 95c, external cover 3.

### BENEFITS OF THE INVENTION

The main benefit of the invention is to provide the visual effect that the vehicle is sliding on the ground when moving, even at low speed, thanks to the fact that the cover is rotating in the direction opposite to the wheel rotation.

Another benefit of the invention is that, as the rotation of the cover is slower than the wheel rotation, the rotation of the cover is always visible by human eye at all usual vehicle speeds.

## Claims

1. A wheel arrangement, comprising:
- a vehicle wheel having an axis of rotation (A1)
- an external cover (3) which is also rotatably mounted about the axis of rotation of the vehicle wheel,
- an intermediate gear (5) which engages with both the vehicle wheel and the external cover, said intermediate gear being adapted to be driven by the vehicle wheel when said vehicle wheel is rotating in a first direction (71) about the axis of rotation, and said intermediate gear being adapted, when driven by the vehicle wheel, to drive said external cover in rotation about the axis of rotation in a second direction (73) opposite to said first direction, **characterized by** a pendulum (6) which is rotatably mounted about the axis of rotation of the vehicle wheel, where the intermediate gear is linked to the said pendulum.

2. A wheel arrangement according to claim 1, wherein the vehicle wheel includes a rigid bracket (1) which is in engagement with the intermediate gear (5) and which is adapted to drive said intermediate gear when said vehicle wheel is rotating.

3. A wheel arrangement according to claim 2, wherein the bracket includes a spindle (10) on which the pendulum (6) and the external cover (3) are rotatably mounted.

4. A wheel arrangement according to claim 2 or claim 3, wherein the wheel includes a rigid rim (2) and the bracket is fixed to said rim.

5. A wheel arrangement according to anyone of the preceding claims, wherein the pendulum includes a stem (4) around which is mounted the intermediate gear.

6. A wheel arrangement according to claim 5, wherein the intermediate gear includes first (53) and second (54) gear wheels which are rigid with one another and which are rotatably mounted
together around the stem (4) of the pendulum, the first gear wheel engaging with the vehicle wheel and the second gear wheel engaging with the external cover.

7. A wheel arrangement according to anyone of the preceding claims, wherein the intermediate gear has at least a driving interface which is made of friction material and which is in engagement with one element chosen between the vehicle wheel and the external cover.

8. A wheel arrangement according to anyone of claims 1-6, wherein the intermediate gear has at least a driving interface which includes a toothing, said toothing meshing with a complementary toothing which is rigid with one element chosen between the vehicle wheel and the external cover.

9. A wheel cover arrangement adapted to be fitted on a vehicle wheel having an axis of rotation (A1), said wheel cover arrangement comprising:
- an external cover (3) which is also adapted to be rotatably mounted about the axis of rotation of the vehicle wheel,
- an intermediate gear (5) which is adapted to be in engagement with both the vehicle wheel and the external cover, said intermediate gear being adapted to be driven by the vehicle wheel when said vehicle wheel is rotating in a first direction (71) about the axis of rotation, and said intermediate gear (5) being adapted, when driven by the vehicle wheel, to drive said external cover in rotation about the axis of rotation in a second direction (73) opposite to said first direction, **characterized by** a pendulum (6) which is adapted to be rotatably mounted about the axis of rotation of the vehicle wheel, where the intermediate gear is linked to the said pendulum

10. A wheel cover arrangement according to claim 9, further including a rigid bracket (1) which is adapted to be secured to the vehicle wheel, said bracket engaging with the intermediate gear (5) and being adapted to drive said intermediate gear when the vehicle wheel is rotating.

11. A wheel cover arrangement according to claim 10, wherein the bracket includes a spindle (10) on which the pendulum and the external cover are rotatably mounted.

12. A wheel cover arrangement according to anyone of claims 9-11, wherein the pendulum includes a stem (4) around which is mounted the intermediate gear.

13. A wheel cover arrangement according to claim 12, wherein the intermediate gear includes first (53) and second (54) gear wheels which are rigid with one another and which are rotatably mounted together around the stem (4) of the pendulum, the first gear wheel being adapted to engage with the vehicle wheel and the second gear wheel engaging with the external cover.

14. A wheel cover arrangement according to anyone of claims 9-13 wherein the intermediate gear has at least a driving interface which is made of friction material and which is in engagement with one element chosen between the vehicle wheel bracket and the external cover.

15. A wheel cover arrangement according to anyone of claims 9-13 wherein the intermediate gear has at least a driving interface which includes a toothing, said toothing meshing with a complementary toothing which is rigid with one element chosen between the vehicle wheel bracket and the external cover.

## Patentansprüche

1. Radanordnung umfassend :
- ein Fahrzeugrad mit einer Rotationsachse (A1),
- eine Radkappe (3), die um die Radrotationsachse drehbar ist,
- ein Zwischengetriebe (5), das zugleich mit dem Fahrzeugrad und der Radkappe gekoppelt wird, wobei besagtes zwischengetriebe geeignet ist, um durch das Fahrzeugrad angetrieben zu werden, und besagtes Fahrzeugrad dreht um die Rotationsachse (A1) nach einer ersten Richtung (71), wobei besagtes Zwischengetriebe geeignet ist, um die Radkappe nach einer gegenlaüfigen zweiten Richtung (73) anzutreiben,
**dadurch gekennzeichnet**,
ein Gewichtgerät (6), das um die Radrotationsachse drehbar ist, wobei besagtes Gewichtgerät mit besagtem Zwischengetriebe verbunden ist

2. Radanordnung nach Anspruch 1, wobei das Fahrzeugrad eine starre Platte (1) aufweist, die in dem Zwischengetriebe (5) eingreift, und die geeignet ist, um besagtes Zwischengetriebe anzutreiben, wenn besagtes Fahrzeugrad dreht

3. Radanordnung nach Anspruch 2, wobei die Platte eine Spindel enthält, um die das Gewichtgerät (6) und die Radkappe (3) drehbar ausgebildet sind,

4. Radanordnung nach einem der Ansprüche 2 bis 3, umfassend eine starre Felge, auf der die Platte (1) festgelegt ist

5. Radanordnung nach einem der Ansprüche 2 bis 4, wobei das Gewichtgerät (6) eine Stange (4) aufweist, um die das Zwischengetriebe drehbar ist

6. Radanordnung nach Anspruch 5, wobei das Zwischengetriebe (5) eine erste (53) und zweite (54) verbunden Zahnräder aufweist, die um die Stange des Zwischengetriebes drehbar sind, wobei das erste Zahnrad von dem Fahrzeugrad angetrieben wird, und wobei das zweite Zahnrad die Radkappe antreibt

7. Radanordnung nach einem der Ansprüche 1 bis 6, wobei das Zwischengetriebe (5) mindestens eine von Reibenmaterial ausgebildete Antreibschnittstelle aufweist, die geeignet ist, um ein der unter dem Rad und der Radkappe ausgewählten Glieder anzutreiben

8. Radanordnung nach einem der Ansprüche 1 bis 6, wobei das Zwischengetriebe (5) mindestens eine Zahnung enthaltende Antreibschnittstelle aufweist, wobei besagtes Zahnung mit einer ergänzenden Zahnung eingegriffen ist, die unter dem Rad und der Radkappe ausgewählt ist

9. Radkappeanordnung, auf einem Fahrzeugrad mit einer Rotationsachse (A1) ausgestattet kann, besagtes Radkappeanordnung umfassend :
- eine Radkappe (3), die um die Radrotationsachse drehbar ist,
- ein Zwischengetriebe (5), das zugleich mit dem Fahrzeugrad und der Radkappe gekoppelt wird, wobei besagtes Zwischengetriebe geeignet ist, um durch das Fahrzeugrad angetrieben zu werden, und besagtes Fahrzeugrad dreht um die Rotationsachse (A1) nach einer ersten Richtung (71), wobei besagtes Zwischengetriebe geeignet ist, um die Radkappe nach einer gegenlaüfigen zweiten Richtung (73) anzutreiben,
**dadurch gekennzeichnet**,
ein Gewichtgerät (6), das um die Radrotationsachse drehbar ist, wobei besagtes Gewichtgerät mit besagtem Zwischengetriebe verbunden ist

10. Radkappeanordnung nach Anspruch 9, außerdem umfassend eine starre Platte (1), die auf dem Fahrzeugrad festgelegt ist, aufweist, besagtes Platte in dem Zwischengetriebe (5) eingreift, und die geeignet ist, um besagtes Zwischengetriebe anzutreiben, wenn besagtes Fahrzeugrad dreht

11. Radkappeanordnung nach Anspruch 10, wobei die Platte eine Spindel enthält, um die das Gewichtgerät (6) und die Radkappe (3) drehbar ausgebildet sind,

12. Radkappeanordnung nach einem der Ansprüche 9 bis 11, wobei das Gewichtgerät (6) eine Stange (4) aufweist, um die das Zwischengetriebe drehbar ist

13. Radkappeanordnung nach Anspruch 12, wobei das Zwischengetriebe (5) eine erste (53) und zweite (54) verbunden Zahnräder aufweist, die um die Stange des Zwischengetriebes drehbar sind, wobei das erste Zahnrad von dem Fahrzeugrad angetrieben wird, und wobei das zweite Zahnrad die Radkappe antreibt

14. Radkappeanordnung nach einem der Ansprüche 9 bis 13, wobei das Zwischengetriebe (5) mindestens eine von Reibenmaterial ausgebildete Antreibschnittstelle aufweist, die geeignet ist, um ein der unter dem Rad und der Radkappe ausgewählten Glieder anzutreiben

15. Radkappeanordnung nach einem der Ansprüche 9 bis 13, wobei das Zwischengetriebe (5) mindestens eine Zahnung enthaltende Antreibschnittstelle aufweist, wobei besagtes Zahnung mit einer ergänzenden Zahnung eingegriffen ist, die unter dem Rad und der Radkappe ausgewählt ist

## Revendications

1. Dispositif de roue, comprenant:
- une roue de véhicule ayant un axe de rotation (A1),
- un enjoliveur (3) qui est apte à pivoter autour de l'axe de rotation de la roue,
- un engrenage intermédiaire (5) qui s'interface à la fois avec la roue de véhicule et avec l'enjoliveur, le dit engrenage intermédiaire étant adapté pour être entraîné par la roue de véhicule, ladite roue de véhicule tournant dans une première direction (71) autour de l'axe de rotation, et le dit engrenage intermédiaire étant adapté pour entrainer l'enjoliveur dans une seconde direction (73) opposée à la première direction,
**caractérisé en ce qu'**un pendule (6) est adapté pour tourner autour de l'axe de rotation de la roue, ledit engrenage intermédiaire (5) étant lié au dit pendule (6)

2. Dispositif de roue selon la revendication 1, dans lequel la roue comprend un support rigide (1) qui est engagé avec l'engrenage intermédiaire et qui est adapté pour entrainer ledit engrenage intermédiaire (5) lorsque la roue tourne.

3. Dispositif de roue selon la revendication 2, dans lequel le support comprend un arbre (10) autour duquel sont montés pivotants le pendule et l'enjoliveur.

4. Dispositif de roue selon l'une des revendications 2 ou 3, comprenant une jante rigide sur laquelle est fixée le support (1).

5. Dispositif de roue selon l'une des revendications 2 à 4, dans lequel le pendule comprend une tige (4) autour de laquelle tourne l'engrenage intermédiaire.

6. Dispositif de roue selon la revendication 5, dans lequel l'engrenage intermédiaire (5) comprend une première (53) et une seconde (54) roues dentées solidairement liées et qui tournent autour de la tige (4) du pendule (6), la première roue dentée étant entrainée par la roue du véhicule et la seconde entrainant l'enjoliveur.

7. Dispositif de roue selon une quelconque des revendications 1 à 6, dans lequel l'engrenage intermédiaire (5) comprend au moins une interface d'entrainement en matériau de friction apte à être interfacé avec un des éléments choisi parmi la roue ou l'enjoliveur.

8. Dispositif de roue selon une quelconque des revendications 1 à 6, dans lequel l'engrenage intermédiaire (5) comprend au moins une interface d'entrainement comprenant une denture, ladite denture s'engrenant dans une denture complémentaire située sur un des éléments choisi parmi la roue ou l'enjoliveur.

9. Dispositif d'enjoliveur de roue adapté pour une roue de véhicule ayant un axe de rotation (A1) comprenant:
- un enjoliveur (3) qui est apte à pivoter autour de l'axe de rotation de la roue,
- un engrenage intermédiaire (5) qui s'interface à la fois avec la roue de véhicule et avec l'enjoliveur, le dit engrenage intermédiaire étant adapté pour être entraîné par la roue de véhicule, ladite roue de véhicule tournant dans une première direction (71) autour de l'axe de rotation, et le dit engrenage intermédiaire (5) étant adapté pour entrainer l'enjoliveur dans une seconde direction (73) opposé à la première direction,
**caractérisé en ce qu'**un pendule (6) est adapté pour tourner autour l'axe de rotation de la roue, l'engrenage intermédiaire étant lié au dit pendule.

10. Dispositif d'enjoliveur de roue selon la revendication 9, comprenant un support rigide (1) adapté pour être fixé à la roue du véhicule, ledit support rigide (1) étant engagé dans l'engrenage intermédiaire et adapté pour entrainer l'engrenage intermédiaire (5) lorsque la roue tourne.

11. Dispositif d'enjoliveur de roue selon la revendication 10, dans lequel le support comprend un arbre (10) autour duquel sont montés, rotatifs, le pendule et l'enjoliveur.

12. Dispositif d'enjoliveur de roue selon la revendication 9 à 11, dans lequel le pendule comprend une tige (4) autour de laquelle tourne l'engrenage intermédiaire.

13. Dispositif d'enjoliveur de roue selon la revendication 12, dans lequel l'engrenage intermédiaire (5) comprend une première (53) et une seconde (54) roues dentées solidairement liées et qui tournent autour de la tige (4) du pendule (6), la première roue dentée étant entrainée par la roue du véhicule et la seconde entrainant l'enjoliveur.

14. Dispositif d'enjoliveur de roue selon lune des revendications 9 à 13, dans lequel l'engrenage intermédiaire (5) comprend au moins une interface d'entrainement en matériau de friction apte à être interfacée avec un des éléments choisi parmi la roue ou l'enjoliveur.

15. A Dispositif d'enjoliveur de roue selon lune des revendications 9 à 13 dans lequel l'engrenage intermédiaire (5) comprend au moins une interface d'entrainement comprenant une denture, ladite denture s'engrenant dans une denture complémentaire située sur un des éléments choisi parmi la roue ou l'enjoliveur.
